(19) Europäisches Patentamt / European Patent Office / Office européen des brevets

(11) **EP 2 138 400 B1**

(12) **FASCICULE DE BREVET EUROPEEN**

(45) Date de publication et mention
de la délivrance du brevet:
**18.08.2010 Bulletin 2010/33**

(51) Int Cl.:
**B64C 27/51** *(2006.01)* **B64C 27/00** *(2006.01)*

(21) Numéro de dépôt: **09007441.0**

(22) Date de dépôt: **05.06.2009**

(54) **Pale munie d'un résonateur pour réduire les mouvements en traînée de ladite pale et procédé mis en œuvre par ladite pale**

Mit einem Resonator versehenes Blatt zur Reduzierung der Bewegungen im Strömungswiderstand dieses Blatts und Verfahren zur Implementierung dieses Blatts

Blade equipped with a resonator for reducing the drag movements of said blade and method for implementation by said blade

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **27.06.2008 FR 0803619**

(43) Date de publication de la demande:
**30.12.2009 Bulletin 2009/53**

(73) Titulaire: **EUROCOPTER**
**13725 Marignane Cédex (FR)**

(72) Inventeurs:
• **Manfredotti, Thomas**
**06480 La Colle sur Loup (FR)**
• **Cranga, Paul**
**13004 Marseille (FR)**
• **Guitton, Julien**
**13220 Chateauneuf-Les-Martigues (FR)**

(74) Mandataire: **GPI & Associés**
**1330, rue Guillibert de la Lauzière**
**EuroParc de Pichaury, Bât B2**
**13856 Aix en Provence Cedex 3 (FR)**

(56) Documents cités:
**EP-A- 1 101 034 US-A- 1 833 751**

**Description**

La présente invention concerne une pale munie d'un résonateur intégré pour réduire ses mouvements en traînée ainsi que le procédé mis en oeuvre par une telle pale, plus particulièrement une pale d'un rotor principal de sustentation et de propulsion d'un giravion, notamment d'un hélicoptère.

Le domaine technique de l'invention est celui des moyens d'amortissement des mouvements en traînée d'une pale.

De façon générale, les rotors de giravions comportent un moyeu entraîné en rotation selon un axe de rotation par un arbre de sortie d'une boite de transmission de puissance, dénommé arbre d'entraînement, ainsi qu'au moins deux pales fixées au moyeu par l'intermédiaire d'articulations appropriées, en particulier par l'intermédiaire d'une butée sphérique lamifiée dédiée à chaque pale, et des amortisseurs interpales reliant chacun deux pales adjacentes ou des amortisseurs reliant chaque pale au moyeu.

En effet, il est rappelé que dans l'hypothèse de l'encastrement de chaque pale sur un moyeu, le rotor ainsi constitué est un rotor rigide. En vol stationnaire, la répartition des efforts aérodynamiques le long d'une pale engendre une répartition des moments de flexion en battement et en traînée dont les valeurs sont très importantes au pied de la pale en raison de l'augmentation de la vitesse circonférentielle proportionnellement au rayon du rotor.

Par ailleurs, en vol de translation, la pale dite « avançante » porte plus que la pale dite « reculante » du fait de l'inégalité des vitesses de l'air comme cela sera précisé par ailleurs.

Par conséquent, la résultante des forces aérodynamiques exercées sur une pale n'a donc pas la même valeur en chaque azimut, ni le même point d'application : le moment d'encastrement au pied de la pale est ainsi élevé et variable, ce qui génère des contraintes alternées entraînant un phénomène de fatigue préjudiciable des matériaux. De plus, la résultante des forces aérodynamiques de toutes les pales n'est plus portée par l'axe rotor ce qui entraîne la création d'un moment de roulis, croissant avec la vitesse qui peut rendre difficile l'équilibre des forces en vol de translation.

Afin de remédier à ces inconvénients, il est connu d'articuler les pales sur le moyeu autour d'un axe perpendiculaire à l'arbre d'entraînement et désigné axe de battement vertical auquel correspond une articulation de battement vertical capable de reprendre une force d'orientation quelconque mais ne peut, en aucun cas, reprendre un moment. Par conséquent, si une pale est articulée en battement sur le moyeu, le moment de flexion de battement sera nul à l'attache. Pour satisfaire l'équilibre d'une pale, les efforts centrifuges maintiennent la pale après une certaine levée de celle-ci, laissant apparaître une conicité $a_0$.

Dans ces conditions, il n'y a plus de moment de roulis important en translation d'une part et les pales ne tournent plus dans un plan, mais leurs extrémités extérieures décrivent un cône très ouvert. En pratique, l'axe de battement ne se trouve plus, alors, sur l'axe de rotation mais est décalé d'une distance $\underline{a}$, appelée excentricité.

Il convient encore de rappeler qu'il faut, pour assurer la sustentation d'un hélicoptère lors de ses différentes configurations, pouvoir contrôler la sustentation du rotor et la faire varier. C'est ainsi qu'est introduite l'articulation de pas, dont l'axe est sensiblement parallèle à l'envergure de la pale correspondante. Ce nouveau degré de liberté permet de contrôler la portance de la pale par action sur la commande de pas général et aussi de faire varier le pas cycliquement, permettant ainsi le contrôle du plan de rotation des pales qui décrivent alors un cône dont l'axe virtuel ne coïncide plus avec l'axe d'entraînement : la résultante des forces appliquées au moyeu change de direction en même temps que le plan du rotor. De ce fait, il en résulte des moments autour du centre de gravité de l'hélicoptère, ce qui permet son pilotage.

Comme indiqué précédemment, le plan de rotation des pales peut être différent du plan perpendiculaire à l'arbre d'entraînement. Dans ces conditions, il est nécessaire d'articuler chaque pale en traînée car l'extrémité de chaque pale est à une distance variable de l'arbre rotor. Sinon, il apparaîtrait nécessairement des forces d'inertie, génératrices de moments de flexion alternée de chaque pale dans son plan. Une telle articulation de traînée se fait en articulant une pale autour d'un axe de traînée sensiblement parallèle à l'axe rotor, et par suite sensiblement perpendiculaire aux efforts de traînée. Pour qu'une telle pale puisse être entraînée à partir de l'arbre d'entraînement, il faut bien sûr que l'articulation de traînée soit suffisamment éloignée de l'axe rotor pour que le moment dû aux forces centrifuges équilibre le moment dû aux forces de traînée et d'inertie, ce qui exige un déport de l'axe de traînée ou excentrement $\underline{e}$, et ceci sans que l'angle $\delta$ dit de « traînée », soit trop important.

Par conséquent, les pales d'un rotor articulé d'aéronef à voilure tournante, notamment un hélicoptère, peuvent être animées des quatre mouvements suivants :

I) une rotation autour de l'axe rotor,

II) une rotation autour de l'axe de battement vertical, grâce à l'articulation de battement vertical,

III) une rotation autour de l'axe de traînée, encore dit axe de battement horizontal, grâce à l'articulation de battement horizontal, ou articulation de traînée.

IV) une rotation autour de l'axe de pas de la pale grâce à une articulation de pas (non spécifique des rotors articulés).

Comme prévu par le brevet FR2497073, par exemple, les trois rotations II-111 et IV décrites ci-dessus peuvent être réalisées par un seul organe tel qu'une butée sphérique lamifiée.

Toutefois, les oscillations de chaque pale autour de son axe de traînée peuvent se coupler de façon instable avec les mouvements ou les modes de déformations élastiques de la cellule, en particulier les oscillations de l'hélicoptère posé au sol sur ses atterrisseurs : c'est l'origine du phénomène, désigné « résonance au sol », qui peut être dangereux pour l'appareil lorsque la fréquence propre, exprimée dans les axes fixes de l'appareil, des oscillations des pales autour de leurs axes de traînée est voisine de l'une des fréquences propres des oscillations de l'appareil.

On connaît par le document FR 791701 un résonateur à inertie porté par une pale de rotor pour amortir ou contribuer à amortir les vibrations ou les oscillations de cette pale.

Ce résonateur à inertie comprend un ou plusieurs éléments pesants susceptibles d'effectuer un mouvement transversal par rapport à l'axe longitudinal de la pale.

Par suite, une « caisse » est fixée à la membrure d'une pale. La membrure de la pale étant disposée selon l'axe longitudinal de la pale, la caisse est agencée transversalement à cette membrure.

Au moins un élément pesant est alors disposé dans la caisse, cette dernière lui servant de moyen de guidage lors de son déplacement transversal.

Selon ce document FR 791701, il convient donc de déplacer transversalement un élément pesant pour résoudre le problème posé.

En effet, le document FR 791701 explique que si la pale effectue un mouvement de traînée, le poids se déplace dans le sens opposé au sens de déplacement de la pale ce qui contribue à amortir le mouvement de cette pale, le mouvement de l'élément pesant étant retardé par rapport à celui de la pale du fait de son inertie.

De même, bien que le domaine des pales d'éoliennes soit éloigné de l'invention dans la mesure où il n'y pas d'apparitions du phénomène de résonance sol en tant que tel, les documents DE10202995 et EP0792414 envisagent des résonateurs à inertie utilisant le déplacement transversal d'un élément pesant selon une direction perpendiculaire à une direction longitudinale de la pale, ladite direction longitudinale passant par le pied de la pale et son extrémité et étant sensiblement parallèle à l'axe de variation de pas de la pale voire confondue à cet axe de variation de pas.

Enfin dans le même registre, le document EP1101034 prévoit une pale d'éolienne munie d'une cavité en forme de O à l'intérieur de laquelle se déplace un liquide dans la direction des oscillations, et donc transversalement à la pale.

Bien qu'efficace, ces différents résonateurs prévoyant un déplacement transversal d'un élément pesant apporte un amortissement limité, et ne donnent donc pas totalement satisfaction.

Par conséquent, les constructeurs de giravions utilisent généralement une autre solution. En effet, ces constructeurs remédient au phénomène soulevé de « résonance au sol » en introduisant sur les axes de traînée un amortissement par un résonateur du type amortisseur visqueux ou sec, notamment, ou encore une rigidité à l'aide de câbles de tierçage associés ou non à des amortisseurs comme sur l'hélicoptère ALOUETTE de la demanderesse.

Une fonction analogue à celle des câbles de tierçage est assurée par des liaisons élastiques interpales. En pratique, il s'agit de disposer un amortisseur entre deux pales adjacentes, les fixations d'un tel amortisseur à chacune de deux pales adjacentes étant à égale distance du centre rotor, c'est-à-dire à un rayon identique par rapport à ce centre rotor.

Ces amortisseurs de traînée interpales comprennent des moyens de rappel élastique à raideur et amortissement déterminés, pour combattre les phénomènes de résonance, en particulier de résonance sol et aussi de résonance de chaîne cinématique qui peuvent apparaître notamment sur les hélicoptères.

Les brevets FR 2 630 703 et US 4 915 585 décrivent un rotor dont chaque pale est fixée au moyeu par un manchon dont les extrémités sont en forme de chape comportant deux branches espacées et en regard mutuel, un amortisseur de traînée interpale étant fixé à deux pales adjacentes par deux rotules respectives.

Bien qu'efficace, l'agencement d'amortisseurs de traînée interpales présente des inconvénients.

En premier lieu, la masse de chaque amortisseur interpale est couramment comprise entre six et onze kilogrammes ce qui n'est pas négligeable.

En second lieu, le mouvement de la pale étant forcé en vol à la fréquence du rotor principal, des charges sont imposées au moyeu et sur la partie de la pale ou du manchon permettant la fixation de l'amortisseur. Ces charges induisent ainsi un surdimensionnement des différents composants, et donc une augmentation de la masse de ce moyeu.

Enfin, il est à noter que les amortisseurs interpales travaillent la plupart du temps de manière partielle sous l'effet des débattements dynamiques des pales et augmentent la traînée aérodynamique du rotor.

La présente invention a alors pour objet de proposer une pale sustentatrice, de préférence de giravion, munie d'un résonateur permettant d'amortir le mouvement de traînée de la pale, pour éviter l'apparition d'un phénomène de « résonance au sol » notamment.

Selon l'invention, une pale s'étendant longitudinalement d'un pied de la pale à une extrémité libre de cette pale est munie d'un résonateur intégré, c'est-à-dire intégré dans la pale, pour réduire les mouvements en traînée de cette pale, ce résonateur étant pourvu d'un réservoir fermé, partiellement rempli par un liquide.

La pale, par exemple une pale de giravion, est remarquable en ce que le résonateur comporte un tube central plongé à l'intérieur du réservoir, le réservoir et le tube central étant agencés selon une direction longitudinale de la pale, le tube central ayant une première et une deuxième extrémités qui communiquent avec le réservoir afin que le liquide puisse se déplacer du réservoir vers le tube central et inversement, à savoir du tube central vers le réservoir.

La direction longitudinale, selon laquelle le réservoir et le tube central sont agencés, est sensiblement parallèle à l'axe de variation de pas de la pale, voire est confondue avec cet axe de variation de pas. Par suite, la direction longitudinale est dirigée selon l'envergure de la pale.

Contrairement aux préjugés existants, l'invention vise à agencer un élément pesant, liquide, dans une pale de manière à laisser à cet élément pesant liquide une liberté de mouvement selon une direction longitudinale de la pale et non pas selon une direction transversale perpendiculaire à l'axe de variation de pas de la pale.

Le résonateur peut alors de manière surprenante lutter efficacement contre les mouvements de traînée de la pale, lorsque cette pale est entraînée en rotation autour d'un axe de rotation, en générant des forces de Coriolis secondaires exercées sur la pale.

En effet, quand la pale est entraînée en rotation autour d'un axe de rotation d'un moyeu d'un rotor de sustentation d'un giravion, cette pale évolue en traînée autour d'une position moyenne par rapport au moyeu du rotor sous l'effet de forces de Coriolis primaires.

Quand la pale se trouve à cette position moyenne, le liquide est dans une position d'équilibre à l'intérieur du résonateur, en remplissant éventuellement partiellement le réservoir et le tube central.

Cependant, lorsque la pale entame un mouvement de traînée autour de son axe de traînée à cause des forces de Coriolis primaires, l'élément pesant du résonateur que représente le liquide se déplace radialement par rapport à la trajectoire décrite par la pale, et donc longitudinalement par rapport à cette pale.

Plus précisément, si le mouvement de traînée tend à déplacer la pale selon un premier sens par rapport à la position moyenne, lequel premier sens correspond au sens de rotation du rotor équipé de ladite pale autour d'un axe de rotation, alors le liquide se déplace longitudinalement dans le tube central vers l'extrémité libre de la pale. Le tube central communiquant par ses première et deuxième extrémités avec le réservoir, le liquide s'échappe du tube central et remplit donc le réservoir dans lequel est agencé ce tube central. Par suite, le liquide se déplace longitudinalement dans le réservoir en se dirigeant vers le pied de la pale.

Ce mouvement du liquide tend à déplacer le centre de gravité du résonateur vers l'extrémité libre de la pale. L'élément pesant du résonateur, le liquide, tend donc à s'éloigner de l'axe de rotation du moyeu du rotor de manière à se rapprocher de l'extrémité libre de la pale. Il en résulte la création de forces de Coriolis secondaires, antagonistes par rapport aux forces de Coriolis primaires, agissant perpendiculairement au sens du mouvement en traînée de la pale et donc selon un deuxième sens opposé au premier sens de rotation du rotor.

En effet, une pale avançante, c'est-à-dire soumise à une augmentation de sa vitesse relative par rapport à l'écoulement d'air incident, se soulève. Dés lors tout élément de la pale se rapproche de l'axe de rotation du rotor et sa vitesse circonférentielle, sur sa trajectoire devrait diminuer. Or, par effet d'inertie, les forces de Coriolis primaires maintiennent constants la vitesse de l'extrémité libre de la pale et le moment cinétique de cette pale notamment. Ces forces de Coriolis primaires à l'origine du mouvement de traînée de la pale sont dues à l'accélération de Coriolis résultant de la vitesse relative de montée de la pale associée à la vitesse de rotation angulaire d'entrainement du rotor.

Chaque élément de la pale est donc soumis à une augmentation de vitesse dans le sens de rotation du rotor, ce qui accroit la force centrifuge et déplace l'élément pesant vers l'extérieur. Le liquide passe alors du tube central vers le réservoir.

Le réservoir ayant de fait une section plus importante que celle du tube central qu'il enserre, le centre de gravité du résonateur se déplace vers l'extrémité libre de la pale ce qui tend à faire abaisser la pale par effet de gravité et simultanément s'oppose à l'augmentation de vitesse de tout élément de la pale. Le mouvement de traînée est alors de fait réduit dans ce sens de rotation.

Plus précisément, la vitesse relative de descente de la pale associée à la vitesse de rotation angulaire d'entraînement du rotor génère des forces de Coriolis secondaires, antagonistes aux forces de Coriolis primaires, qui s'opposent au mouvement de traînée de la pale.

Par conséquent, en l'absence de l'invention, la pale subit uniquement les forces de Coriolis primaires ce qui entraine un mouvement en traînée de grande amplitude.

A contrario, l'invention permet de générer des forces de Coriolis secondaires opposées auxdites forces de Coriolis primaires, ce qui permet de limiter, voir d'annihiler le mouvement en traînée de la pale.

De même, si le mouvement de traînée tend à déplacer la pale dans le deuxième sens opposé au premier sens, alors l'élément pesant liquide se déplace longitudinalement en passant du réservoir vers le tube central. Le centre de gravité du résonateur tend à se rapprocher de l'axe de traînée de manière à se rapprocher du pied de la pale. Il en résulte la création de forces de Coriolis secondaires, contraires aux forces de Coriolis primaires, agissant selon le sens de rotation du rotor.

De manière surprenante et innovante, le résonateur ne prévoit pas un déplacement de l'élément pesant liquide dans la direction du mouvement en traînée de la pale, indépendamment de son sens, mais au contraire selon une direction longitudinale sensiblement perpendiculaire à ladite direction du mouvement de la pale en traînée de telles sorte que les oscillations de battement et de traînée de la pale soient réduites.

En outre, l'invention peut comporter une ou plusieurs des caractéristiques additionnelles qui suivent.

Par exemple, le réservoir comporte un moyen de fixation, tel qu'une pluralité de nervures, du tube central à une paroi interne du réservoir.

Le moyen de fixation garantit alors un agencement correct du tube central dans le réservoir.

Par ailleurs, les première et deuxième extrémités du tube central sont éventuellement ouvertes et débouchent à l'intérieur du réservoir.

Le tube central peut alors avoir la forme d'un cylindre dont les bases sont ouvertes de manière à déboucher sur le réservoir pour autoriser un déplacement du liquide du résonateur. Les bases du tube, situées aux première et deuxième extrémités du tube central, sont alors espacées d'un premier et d'un deuxième fonds du réservoir afin que lesdits fonds n'obturent pas lesdites première et deuxième extrémités.

Avantageusement, le réservoir présente une symétrie de révolution autour d'un premier axe de symétrie. De même, le tube central peut présenter une symétrie de révolution autour d'un deuxième axe de symétrie.

Le réservoir et le tube central ayant respectivement un premier et un deuxième axes de symétrie, ces premier et deuxième axes de symétrie sont optionnellement confondus, et notamment confondus avec un axe longitudinal de ladite pale s'étendant selon ladite direction longitudinale.

Par ailleurs, le réservoir est muni successivement du pied de la pale vers son extrémité libre d'une première et d'une deuxième zones extrémales ayant respectivement une première et une deuxième dimensions selon une direction transversale de la pale perpendiculaire à la direction longitudinale.

Selon un premier mode de réalisation, la première dimension est égale à la deuxième dimension. A contrario, selon un deuxième mode de réalisation, la première dimension est avantageusement plus grande que la deuxième dimension.

Enfin, le fluide possède une viscosité maximale de 2000 centistokes, dans la plage de température allant de -40°C à +40°C, pour optimiser le fonctionnement du résonateur.

La présente invention a de plus pour objet un rotor de giravion muni d'un moyeu apte à effectuer un mouvement rotatif autour d'un axe de rotation, au moins une pale selon l'invention étant fixée au moyeu par une articulation de traînée.

Le résonateur comportant un réservoir et un tube central présentant chacun une symétrie de révolution, le réservoir étant muni successivement du pied de la pale vers son extrémité libre d'une première et d'une deuxième zones extrémales, la pulsation du résonateur est déterminée selon la relation suivante :

$$\omega = \Omega \times \sqrt{\frac{R_0}{\left[1 + \left(\dfrac{R_1}{R_2}\right)^2\right] \times (R_0' - R_0)}}$$

ou : « $\times$ » représente le signe de la multiplication,

$\omega$ représente la pulsation du résonateur de la pale en radians par seconde,

$\Omega$ représente la vitesse de rotation du rotor en radians par seconde au régime nominal,

$R_0$ représente l'espacement séparant ledit axe de rotation du liquide lorsque la pale est dans une position moyenne,

$R_1$ représente le premier rayon de la première zone extrémale,

$R_2$ représente le deuxième rayon dudit tube central, et

$R_0'$ représente l'espacement séparant ledit axe de rotation de la face de la deuxième zone extrémale la plus éloignée du pied de la pale.

Ainsi, l'efficacité du résonateur est maximisée.

La présente invention a en outre pour objet un procédé pour limiter les mouvements en traînée, générés par des forces de Coriolis primaires, d'une pale apte à être mis en oeuvre par une pale selon l'invention, notamment une pale d'un rotor de sustentation d'un giravion s'étendant longitudinalement d'un pied de la pale vers une extrémité libre de cette pale.

Conformément à ce procédé on déplace, selon une direction longitudinale de la pale, un élément pesant liquide d'un résonateur intégré dans la pale afin de créer des forces de Coriolis secondaires s'opposant au mouvement en traînée de la pale.

Par ailleurs, le résonateur comportant un réservoir dans lequel est plongé un tube central, on fait au moins partiellement passer ledit liquide du réservoir vers le tube central ou du tube central vers le réservoir pour créer les forces de Coriolis secondaires s'opposant au mouvement en traînée de la pale, en déplaçant le centre de gravité du résonateur.

L'invention et ses avantages apparaîtront avec plus de détails dans le cadre de la description qui suit avec des exemples de réalisation donnés à titre illustratif en référence aux figures annexées qui représentent :

- la figure 1, une coupe schématique d'une pale en position moyenne munie d'un résonateur selon un premier mode de réalisation,

- la figure 2, une coupe schématique d'une pale en position avancée munie d'un résonateur selon un premier mode de réalisation,

- la figure 3, une coupe schématique d'une pale en position reculée munie d'un résonateur selon un premier mode de réalisation, et

- la figure 4, une coupe schématique d'une pale en position moyenne munie d'un résonateur selon un deuxième mode de réalisation.

Les éléments présents dans plusieurs figures distinctes sont affectés d'une seule et même référence.

On note que trois directions X, Y et Z orthogonales les unes par rapport aux autres sont représentées sur les figures. Ces trois directions définissent le référentiel de la pale représentée.

La direction X est dite transversale dans la mesure où elle est disposée perpendiculairement à l'axe de variation de pas AX de la pale 10. Le terme « transversal » est relatif à une direction lui étant parallèle.

Une autre direction Y est dite longitudinale. Le terme « longitudinal » est relatif à une direction lui étant parallèle.

Enfin, une troisième direction Z est dite d'élévation et correspond aux dimensions en hauteur des structures décrites.

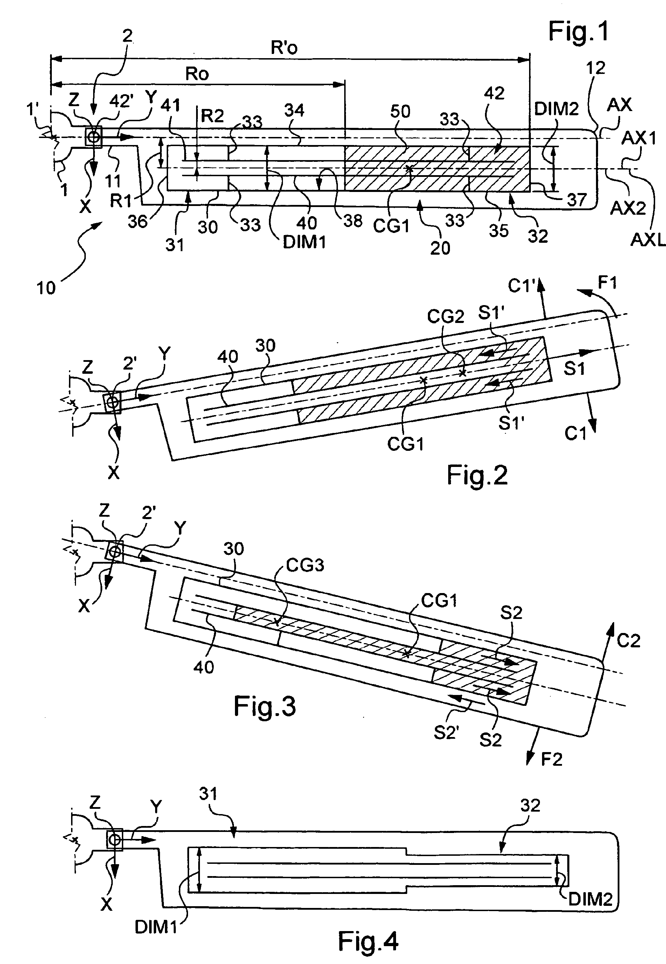

La figure 1 présente une coupe schématique d'une pale 10 en position moyenne munie d'un résonateur selon un premier mode de réalisation.

La pale 10 est fixée sur le moyeu 1 d'un rotor de giravion par une articulation de traînée 2, le pied 11 de pale étant lié à l'articulation de traînée 2 par des moyens usuels.

Lorsque le rotor du giravion est mis en rotation, la pale 10 effectue un mouvement rotatif autour de l'axe de rotation 1' du rotor.

De plus, la pale 10 effectue une rotation autour de l'axe de traînée 2' en avançant ou en reculant par rapport à la position moyenne. Ce mouvement de traînée de la pale 10 peut alors engendrer des situations catastrophiques quand la fréquence propre, exprimée dans le référentiel du giravion, des oscillations de chaque pale autour de leur axe de traînée est voisine de l'une des fréquences propres des oscillations de l'appareil, notamment posé sur son train d'atterrissage.

Pour résoudre ce problème, la pale 10 est alors équipée d'un résonateur 20 intégré à l'intérieur de la pale 10 pour réduire l'amplitude des oscillations en traînée qui déséquilibrent le rotor et génèrent des vibrations importantes susceptibles d'être couplées avec les oscillations du giravion posé sur son train d'atterrissage. Par suite, il est possible de prévoir une trappe sur l'extrados de la pale 10 pour avoir accès à ce résonateur, de manière à réaliser des actions de maintenance par exemple.

Le résonateur 20 comporte un réservoir 30 fermé, pourvu d'une surface avant 34, d'une surface arrière 35, d'un premier fond 36 et d'un deuxième fond 37, respectivement en regard du bord d'attaque, du bord de fuite, du pied 11 et de l'extrémité libre 12 de la pale 10.

Le réservoir 30 comportant successivement du pied 11 de la pale vers son extrémité libre une première puis une deuxième zones extrémales 31, 32, le premier fond 36 se trouve dans la première zone extrémale 31 alors que le deuxième fond est situé dans la deuxième zone extrémale 32.

De plus, le réservoir 30 fermé présente une symétrie de révolution par rapport à un premier axe de symétrie AX1.

Par ailleurs, le réservoir 30 est agencé longitudinalement dans la pale 10 à savoir selon la direction longitudinale Y, ou encore selon l'axe de variation de pas AX de la pale 10.

Plus précisément, le réservoir 30 est disposé le long d'un axe longitudinal AXL de la pale 10 parallèle à la direction longitudinale Y et donc à l'axe de variation de pas AX. En effet, on note que le premier axe de symétrie du réservoir 30 est confondu avec l'axe longitudinale AXL.

Outre le réservoir 30, le résonateur 20 comporte un tube central 40 plongé à l'intérieur de ce réservoir 30.

Le tube central 40 a une forme de cylindre et présente donc une symétrie de révolution autour d'un deuxième axe de symétrie AX2.

A l'instar du réservoir 30, le tube central 40 est disposé selon la direction longitudinale Y de la pale 10, le deuxième axe de symétrie AX2 étant confondu avec le premier axe de symétrie AX1 et l'axe longitudinal AXL.

Par ailleurs, le tube central 40 communique avec le réservoir 30 par ses première et deuxième extrémités 41, 42. Ainsi, les première et deuxième extrémités 41, 42 du tube central sont ouvertes et débouchent sur le réservoir 30, respectivement dans les première et deuxième zones extrémales 31, 32 du réservoir 30.

Le tube central étant un cylindre sur l'exemple représenté sur la figure 1, les première et deuxième extrémités du tube central 40 sont les bases creuses dudit cylindre.

On comprend qu'il convient de positionner avec attention le tube central 40 afin que ses première et deuxième extrémités soient espacées des premier et deuxième fonds 36, 37 du réservoir 40. En effet, pour pouvoir déboucher sur l'intérieur du réservoir, les première et deuxième extrémités du tube central ne doivent pas être obturées par le réservoir, et notamment ses premier et deuxième fonds 36, 37.

Afin de positionner correctement le tube central 40 à l'intérieur du réservoir 30, le résonateur est alors muni d'un moyen de fixation comprenant une pluralité de nervures 33. Le tube central est ainsi fixé à une surface interne 38 du réservoir 30 via les nervures 33 du moyen de fixation.

Dès lors, le résonateur est partiellement rempli d'un liquide 50. Le tube central débouchant sur le réservoir, le liquide peut circuler du tube central 40 vers le réservoir 30, ou du réservoir 30 vers le tube central 40 sous l'effet des forces d'inertie.

En référence à la figure 1, lorsque le rotor est mis en rotation à une vitesse $\Omega$ par l'intermédiaire d'un moteur, le liquide 50 est plaqué sous l'action des forces centrifuges contre le deuxième fond 37 du réservoir 30, à savoir le fond du réservoir et du résonateur le plus éloigné de l'axe de rotation du rotor.

On note que le liquide se trouve à une première distance $R_0$ de l'axe de rotation 1' du rotor. Cette première distance est nécessairement inférieure à une deuxième distance $R_0^{'}$ séparant le deuxième fond 37 de l'axe de rotation 1', le deuxième fond représentant la face 37 de la deuxième zone extrémale 31 la plus éloignée du pied de la pale.

En référence à la figure 2, si la pale 10 s'écarte de sa position moyenne en effectuant un mouvement rotatif autour de son axe de traînée 2' selon la flèche F1 sous l'effet de forces de Coriolis primaires C1', le premier volume de liquide 50 contenu dans le tube central 40 se déplace longitudinalement vers l'extrémité libre 12 de la pale, conformément à la flèche S1 en raison de l'effet des forces d'inertie précédemment explicitées.

Par suite, ce mouvement augmente le deuxième volume de liquide 50 contenu dans le réservoir 30, qui se déplace longitudinalement selon la flèche S1'.

L'augmentation du deuxième volume de liquide 50 au détriment du premier volume de liquide 50 provoque un déplacement du centre de gravité du résonateur 20 d'une position d'équilibre CG1 à une position externe CG2.

Selon le procédé mis en oeuvre, on a donc déplacé selon la direction longitudinale Y un élément pesant, le liquide 50. Ce déplacement provoque une translation du centre de gravité du résonateur selon l'axe longitudinal AXL, cet axe longitudinal représentant de plus les premier et deuxième axes de symétrie AX1, AX2 du réservoir 30 et du tube central 40.

La translation de ce centre de gravité est alors à l'origine de la création de forces de Coriolis secondaires C1 venant contrecarrer le mouvement en traînée de la pale 10 et donc limiter son amplitude. Ces forces de Coriolis secondaires résultent de l'effet combiné de la vitesse de rotation angulaire d'entraînement du rotor et de la vitesse relative de descente de la pale due à la pesanteur, par rotation de la pale par rapport à son axe de battement.

A l'inverse, en référence à la figure 3, si la pale 10 réalise un mouvement de traînée de la position moyenne vers l'arrière autour de son axe de traînée 2 selon la flèche F2, et donc dans le sens contraire au sens de rotation de la pale 10 autour de l'axe de rotation 1', le premier volume de liquide 50 est déplacé longitudinalement vers le pied de la pale selon la flèche S2'.

Par suite, une partie du liquide 50 du deuxième volume pénètre dans le tube central 40 par aspiration et augmente donc le premier volume, le liquide se déplaçant longitudinalement dans le tube central 40 selon la flèche S2'.

L'augmentation du premier volume de liquide au détriment du deuxième volume de liquide entraine un déplacement du centre de gravité du résonateur d'une position d'équilibre CG1 à une position interne CG3, et par suite génère des forces de Coriolis secondaires C2. Ces forces de Coriolis secondaires C2 contrecarrent le mouvement en traînée vers l'arrière de la pale 10.

Ainsi, le liquide contenu dans le résonateur va continuellement se déplacer, selon la direction longitudinale Y. Il en va alors de même du centre de gravité du résonateur qui oscille autour de sa position d'équilibre CG1 entre une position interne CG3 et une position externe CG2.

Avantageusement, la première zone extrémale 31 du réservoir 30 ayant une forme cylindrique d'un premier rayon $R_1$, le tube central 40 ayant une forme cylindrique d'un deuxième rayon $R_2$, la pulsation $\omega$ du résonateur est déterminé à l'aide de la relation suivante :

$$\omega = \Omega \times \sqrt{\dfrac{R_0}{\sqrt{\left[1 + \left(\dfrac{R_1}{R_2}\right)^2\right] \times (R_0' - R_0)}}}$$

Selon le premier mode de réalisation représenté sur les figures 1 à 3, les première et deuxième zones extrémales 31, 32 du réservoir 30 ayant respectivement une première et une deuxième dimensions DIM1, DIM2 selon une direction transversale de ladite pale perpendiculaire à ladite direction longitudinale, les première et deuxième dimensions DIM1, DIM2 sont égales.

A contrario, selon un deuxième mode de réalisation, la première dimension DIM1 est supérieure à la deuxième dimension DIM2, ou la deuxième dimension DIM2 est supérieure à la première dimension DIM1. Ce mode de réalisation permet de régler précisément la position d'équilibre du centre de gravité.

En référence à la figure 4, la première dimension DIM1 est supérieure à la deuxième dimension DIM2.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Pale (10) s'étendant longitudinalement d'un pied (11) de la pale (10) à une extrémité libre (12) de cette pale (10), la pale (10) étant munie d'un résonateur (20) intégré pour réduire les mouvements en traînée (F1, F2) de ladite pale (10), ledit résonateur (20) étant pourvu d'un réservoir (30) fermé, partiellement rempli par un liquide (50), **caractérisée en ce que** ledit résonateur (20) comporte un tube central (40) plongé à l'intérieur dudit réservoir (30), le réservoir (30) et le tube central (40) étant agencés selon une direction longitudinale (Y) de la pale (10), ledit tube central (40) ayant une première et une deuxième extrémités (41, 42) qui communiquent avec ledit réservoir (30) afin que ledit liquide (50) puisse se déplacer du réservoir (30) vers le tube central (40) et inversement.

2. Pale selon la revendication 1, **caractérisée en ce que** ledit réservoir (30) comporte un moyen de fixation (33) dudit tube central (40) à une paroi interne (38) dudit réservoir (30).

3. Pale selon l'une quelconque des revendications précédentes, **caractérisée en ce que** lesdites première et deuxième extrémités (41, 42) du tube central (40) sont ouvertes et débouchent à l'intérieur dudit réservoir (30).

4. Pale selon l'une quelconque des revendications précédentes, **caractérisée en ce que** ledit réservoir (30) présente une symétrie de révolution autour d'un premier axe de symétrie (AX1).

5. Pale selon l'une quelconque des revendications précédentes, **caractérisée en ce que** ledit tube central (40) présente une symétrie de révolution autour d'un deuxième axe de symétrie (AX2).

6. Pale selon l'une quelconque des revendications 4 à 5, **caractérisée en ce que** ledit réservoir (30) et ledit tube central (40) ayant respectivement un premier et un deuxième axes de symétrie (AX1, AX2), lesdits premier et deuxième axes de symétrie (AX1, AX2) sont confondus.

7. Pale selon la revendication 6, **caractérisée en ce que** lesdits premier et deuxième axes de symétrie (AX1, AX2) sont confondus avec un axe longitudinal (AXL) de ladite pale s'étendant selon ladite direction longitudinale (Y).

8. Pale selon l'une quelconque des revendications précédentes, **caractérisée en ce que** ledit réservoir (30) étant muni successivement du pied (11) de la pale (10) vers son extrémité libre (12) d'une première et d'une deuxième zones extrémales (31, 32) ayant respectivement une première et une deuxième dimensions (DIM1, DIM2) selon une direction transversale (X) de ladite pale (10) perpendiculaire à ladite direction longitudinale (Y), ladite première dimension (DIM1) est plus grande que la deuxième dimension (DIM2).

**9.** Pale selon l'une quelconque des revendications précédentes,
**caractérisée en ce que** ledit fluide possède une viscosité maximale de 2000 centistokes.

**10.** Rotor de giravion muni d'un moyeu (1) apte à effectuer un mouvement rotatif autour d'un axe de rotation (1'), au moins une pale (10) étant fixée audit moyeu (1) par une articulation de traînée (2),
**caractérisé en ce que** ladite pale (10) étant selon l'une quelconque des revendications précédentes muni d'un résonateur (20) comportant un réservoir (30) et un tube central (40) présentant chacun une symétrie de révolution, ledit réservoir (30) étant muni successivement du pied (11) de la pale (10) vers son extrémité libre (12) d'une première et d'une deuxième zones extrémales (41, 42), la pulsation (ω) dudit résonateur (20) est déterminée selon lerelation suivante :

$$\omega = \Omega \times \sqrt{\dfrac{R_0}{\left[1+\left(\dfrac{R_1}{R_2}\right)^2\right] \times (R_0' - R_0)}}$$

ou :

- « $\times$ » représente le signe de la multiplication,
- ω représente la pulsation du résonateur de la pale en radians par seconde,
- Ω représente la vitesse de rotation du rotor,
- $R_0$ représente l'espacement séparant ledit axe de rotation du liquide lorsque la pale est dans une position moyenne,
- $R_1$ représente le premier rayon de la première zone extrémale,
- $R_2$ représente le deuxième rayon dudit tube central, et

- $R_0'$ représente l'espacement séparant ledit axe de rotation (1) de la face de la deuxième zone extrémale la plus éloignée du pied de la pale.

**11.** Procédé pour limiter les mouvements en traînée (F1, F2) d'une pale (10) s'étendant longitudinalement d'un pied (11) de la pale (10) à une extrémité libre (12) de cette pale (10), la pale (10) étant munie d'un résonateur intégré,
**caractérisé en ce que**, ledit résonateur (20) comportant un réservoir (30) dans lequel est plongé un tube central (40), on déplace selon une direction longitudinale (Y) de ladite pale (10) un élément liquide (50) du résonateur (20) intégré dans la pale (10) afin de créer des forces de Coriolis secondaires (C1, C2) s'opposant au mouvement en traînée (F1, F2) de la pale (10) en faisant au moins partiellement passer ledit liquide (50) du réservoir (30) vers le tube central (40) ou du tube central (40) vers le réservoir.

**12.** Procédé selon la revendication 11,
**caractérisé en ce qu'**il est mis en oeuvre par une pale (10) selon l'une quelconque des revendications 1 à 10.

## Claims

**1.** Blade (10) extending longitudinally from a root (11) of the blade (10) to a free end (12) of this blade (10), the blade (10) being provided with an incorporated resonator (20) for reducing the drag movements (F1, F2) of said blade (10), said resonator (20) being provided with a closed tank (30) that is partially filled with a liquid (50),
**characterised in that** said resonator (20) includes a central tube (40) immersed inside said tank (30), the tank (30) and the central tube (40) being arranged in a longitudinal direction (Y) of the blade (10), said central tube (40) having first and second ends (41, 42) that communicate with said tank (30) so that said liquid (50) can move from the tank (30) towards the central tube (40), and vice versa.

**2.** Blade according to Claim 1,
   **characterised in that** said tank (30) includes fastener means (33) for fastening said central tube (40) to an inside wall (38) of said tank (30).

**3.** Blade according to any one of the preceding claims,
   **characterised in that** said first and second ends (41, 42) of the central tube (40) are open and open out into the inside of said tank (30).

**4.** Blade according to any one of the preceding claims,
   **characterised in that** said tank (30) is rotationally symmetrical about a first axis of symmetry (AX1).

**5.** Blade according to any one of the preceding claims,
   **characterised in that** said central tube (40) is rotationally symmetrical about a second axis of symmetry (AX2).

**6.** Blade according to either one of Claims 4 to 5,
   **characterised in that** said tank (30) and said central tube (40) have respective first and second axes of symmetry (AX1, AX2), and said first and second axes of symmetry (AX1, AX2) coincide.

**7.** Blade according to Claim 6,
   **characterised in that** said first and second axes of symmetry (AX1, AX2) coincide with a longitudinal axis (AXL) of said blade extending along said longitudinal direction (Y).

**8.** Blade according to any one of the preceding claims,
   **characterised in that** said tank (30) is provided in succession going from the root (11) of the blade (10) towards its free end (12) with first and second end zones (31, 32) having respective first and second dimensions (DIM1, DIM2) in a transverse direction (X) of said blade (10) perpendicularly to said longitudinal direction (Y), said first dimension (DIM1) being greater than the second dimension (DIM2).

**9.** Blade according to any one of the preceding claims,
   **characterised in that** said fluid possesses a maximum viscosity of 2000 centistokes.

**10.** Rotorcraft rotor provided with a hub (1) suitable for rotating about an axis of rotation (1'), at least one blade (10) being fastened to said hub (1) via a drag hinge (2),
   **characterised in that** said blade (10) is a blade according to any one of the preceding claims that is provided with a resonator (20) comprising a tank (30) and a central tube (40), each being rotationally symmetrical, said tank (30) being provided with first and second end zones (41, 42) in succession going from the root (11) of the blade (10) towards its free end (12), the angular frequency (ω) of said resonator (20) being determined by the following relationship:

$$\omega = \Omega \times \sqrt{\dfrac{R_0}{\left[1 + \left(\dfrac{R_1}{R_2}\right)^2\right] \times \left(R_0' - R_0\right)}}$$

where:

   - "$\times$" represents the multiplication sign,
   - ω represents the angular frequency of the blade resonator in radians per second,
   - Q represents the speed of rotation of the rotor,
   - $R_0$ represents the spacing between said axis of rotation and the liquid when the blade is in a mean position,
   - $R_1$ represents the first radius of the first end zone,
   - $R_2$ represents the second radius of said central tube, and
   - $R_0'$ represents the spacing between said axis of rotation (1) and the face of the second end zone furthest away from the root of the blade.

11. Method for limiting the drag movements (F1, F2) of a blade (10) extending longitudinally from a root (11) of the blade (10) to a free end (12) of this blade (10), the blade (10) being provided with an incorporated resonator,
**characterised in that** said resonator (20) comprises a tank (30) having a central tube (40) immersed therein, and a liquid element (50) of the resonator (20) incorporated in the blade (10) is displaced in a longitudinal direction (Y) of said blade (10) so as to create secondary Coriolis forces (C1, C2) opposing the drag movement (F1, F2) of the blade (10) by causing at least some of said liquid (50) to pass from the tank (30) towards the central tube (40) or from the central tube (40) towards the tank.

12. Method according to Claim 11,
**characterised in that** the method is implemented by a blade (10) according to any one of Claims 1 to 10.

**Patentansprüche**

1. Blatt (10) welches sich, ausgehend von einem Fuß (11) des Blattes (10) bis zu einem freien Ende (12) des Blattes längs erstreckt, wobei das Blatt (10) mit einem integrierten Resonator (20) versehen ist, um die Flatterbewegungen (F1, F2) des Blattes (10) zu reduzieren, wobei der Resonator (20) mit einem geschlossenen Behälter (30) versehen ist, der teilweise mit einer Flüssigkeit (50) gefüllt ist,
**dadurch gekennzeichnet, dass** der Resonator (20) ein zentrales Rohr (40) aufweist, welches im Inneren des Behälters (30) angeordnet ist, wobei der Behälter (30) und das zentrale Rohr (40) in einer Längsrichtung (Y) des Blattes (10) angeordnet sind und das zentrale Rohr (40) ein erstes und ein zweites Ende (41, 42) aufweist, die mit dem Behälter (30) in Verbindung stehen, damit die Flüssigkeit (50) sich von dem Behälter (30) zum zentralen Rohr (40) und umgekehrt bewegen kann.

2. Blatt nach Anspruch 1,
**dadurch gekennzeichnet, dass** der Behälter (30) ein Befestigungsmittel (33) des zentralen Rohrs (40) an einer Innenwand (38) des Behälters (30) aufweist.

3. Blatt nach einem der vorstehenden Ansprüche,
**dadurch gekennzeichnet, dass** die ersten und zweiten Enden (41, 42) des zentralen Rohrs (40) offen sind und im Inneren des Behälters (30) münden.

4. Blatt nach einem der vorstehenden Ansprüche,
**dadurch gekennzeichnet, dass** der Behälter (30) eine Rotationssymmetrie um eine erste Symmetrieachse (AX1) aufweist.

5. Blatt nach einem der vorstehenden Ansprüche,
**dadurch gekennzeichnet, dass** das zentrale Rohr (40) eine Rotationssymmetrie um eine zweite Symmetrieachse (AX2) aufweist.

6. Blatt nach einem der Ansprüche 4 und 5,
**dadurch gekennzeichnet, dass** der Behälter (30) und das zentrale Rohr (40) jeweils eine erste und eine zweite Symmetrieachse (AX1, AX2) aufweisen, wobei die ersten und zweiten Symmetrieachsen (AX1, AX2) ineinander übergehen.

7. Blatt nach Anspruch 6,
**dadurch gekennzeichnet, dass** die ersten und zweiten Symmetrieachsen (AX1, AX2) in eine Längsachse (AXL) des Blattes aufgehen, die sich entlang der Längsrichtung (Y) erstreckt.

8. Blatt nach einem der vorstehenden Ansprüche,
**dadurch gekennzeichnet, dass** der Behälter (30) aufeinanderfolgend ausgehend von dem Fuß (11) des Blattes (10) bis zu seinem freien Ende (12) mit einem ersten und einem zweiten extremalen Bereich (31, 32) versehen ist, der jeweils eine erste und eine zweite Abmessung (DIM1, DIM2) in einer Querrichtung (X) des Blattes (10) senkrecht zu der Längsrichtung (Y) aufweist, wobei die erste Abmessung (DIM1) größer ist als die zweite Abmessung (DIM2).

9. Blatt nach einem der vorstehenden Ansprüche,

**dadurch gekennzeichnet, dass** das Fluid eine maximale Viskosität von 2000 Centistokes aufweist.

10. Rotor eines Drehflügelluftfahrzeugs mit einer Nabe (1), die um eine Drehachse (1') eine Drehbewegung ausüben kann, mindestens einem Blatt (10), welches an der Nabe (1) über ein Drehgelenk (2) verbunden ist,
**dadurch gekennzeichnet, dass** das Blatt (10) gemäß einem der vorstehenden Ansprüche ausgestaltet ist und mit einem Resonator (20) versehen ist, der einen Behälter (30) und ein zentrales Rohr (40) aufweist, die jeweils eine Rotationssymmetrie aufweisen, wobei der Behälter (30) aufeinanderfolgend vom Fuß (11) des Blattes (10) bis zu seinem freien Ende (12) einen ersten und einen zweiten extremalen Bereich (41, 42) aufweist und das Pulsieren ($\omega$) des Resonators (20) gemäß der folgenden Gleichung bestimmt ist:

$$\omega = \Omega \times \sqrt{\frac{R_0}{\left[1 + \left(\frac{R_1}{R_2}\right)^2\right] \times (R_0^{\cdot} - R_0)}} \quad ,$$

wobei

- x das Multiplikationszeichen darstellt,
- $\omega$ das Pulsieren des Resonators des Blattes im Radian pro Sekunde,
- $\Omega$ die Rotationsgeschwindigkeit des Rotors,
- $R_0$ den Abstand, der die Rotationsachse von der Flüssigkeit trennt, während das Blatt in einer mittleren Stellung ist,
- $R_1$ den ersten Radius des ersten extremalen Bereichs bezeichnet,
- $R_2$ den zweiten Radius des zentralen Rohres und
- $R_0'$ den Abstand bezeichnet, der die Rotationsachse (1) von der Oberfläche des zweiten extremalen Bereichs, der von dem Fuß des Blattes am meisten entfernt ist, bezeichnet.

11. Verfahren zum Begrenzen der Flatterbewegungen (F1, F2) eines Blattes (10), welches sich längs ausgehend von einem Fuß (11) des Blattes (10) bis zu seinem freien Ende (12) erstreckt, wobei das Blatt (10) mit einem integrierten Resonator versehen ist, **dadurch gekennzeichnet, dass** der Resonator (20) einen Behälter (30) aufweist, in dem ein zentrales Rohr (40) angeordnet ist und man in Längsrichtung (Y) des Blattes (10) ein flüssiges Element (50) des Resonators (20) bewegt, der in das Blatt (10) integriert ist, um sekundäre Corioliskräfte (C1, C2) zu erzeugen, die sich der Flatterbewegung (F1, F2) des Blattes (10) entgegensetzen in dem sie mindestens teilweise die Flüssigkeit (50) des Behälters (30) zum zentralen Rohr (40) hinbewegen oder vom zentralen Rohr (40) zum Behälter.

12. Verfahren nach Anspruch 11,
**dadurch gekennzeichnet, dass** es durchgeführt wird mit einem Blatt (10) gemäß einem der Ansprüche 1 bis 10.

Fig.1

Fig.2

Fig.3

Fig.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2497073
- FR 791701
- DE 10202995
- EP 0792414 A
- EP 1101034 A
- FR 2630703
- US 4915585 A